# EUROPEAN PATENT SPECIFICATION

(11) **EP 2 974 884 B1**
(45) Date of publication and mention of the grant of the patent: **19.04.2017**
(21) Application number: 15173846.5
(22) Date of filing: 25.06.2015
(51) Int. Cl.: B60C 1/00, C08L 9/00, C08L 7/00, C08L 91/00

(54) **RUBBER COMPOSITION FOR TIRE AND PNEUMATIC TIRE**
KAUTSCHUKZUSAMMENSETZUNG FÜR REIFEN UND LUFTREIFEN DAMIT
COMPOSITION DE CAOUTCHOUC POUR PNEU ET BANDAGE PNEUMATIQUE

(30) Priority: 14.07.2014 JP 2014144324
(43) Date of publication of application: 20.01.2016
(73) Proprietor: SUMITOMO RUBBER INDUSTRIES, LTD., Kobe-shi, Hyogo-ken, 651-0072 (JP)
(72) Inventor: MIYAZAKI, Tatsuya, Kobe-shi,, Hyogo 651-0072 (JP)
(74) Representative: Manitz, Finsterwald & Partner GbR

(56) References cited:
- EP-A1- 2 799 480
- US-A1- 2011 144 236
- US-A1- 2012 016 056
- US-A1- 2014 107 261
- DATABASE WPI Week 200805 Thomson Scientific, London, GB; AN 2008-A68694 XP002748643, & JP 2007 321093 A (YOKOHAMA RUBBER CO LTD) 13 December 2007 (2007-12-13)
- Anonymous: "Aromatic modified terpene resin (YS resin TO, TR)", YASUHARA CHEMICAL , 6 June 2013 (2013-06-06), pages 1-2, XP002748656, Retrieved from the Internet: URL:https://web.archive.org/web/2013060609 0438/http://www.yschem.co.jp/english/produ cts/resin/aromatic_modified_terpene.html [retrieved on 2015-10-29]
- DATABASE WPI Week 201359 Thomson Scientific, London, GB; AN 2013-M56413 XP002748645, & WO 2013/122237 A1 (YOKOHAMA RUBBER CO LTD) 22 August 2013 (2013-08-22)
- DATABASE WPI Week 200980 Thomson Scientific, London, GB; AN 2009-Q99504 XP002748646, & JP 2009 263587 A (BRIDGESTONE CORP) 12 November 2009 (2009-11-12)

## Description

### [Technical Field]

The present invention relates to a rubber composition for a tire and a pneumatic tire using the same.

### [Background Art]

As a method for improving the grip performance or the wear resistance of a rubber composition, a method in which a resin such as an α-methylstyrene-based resin or a coumarone-indene-based resin is blended in is known (for example, refer to Patent Document 1). SA85 manufactured by Arizona Chemical Company, LLC., which is ordinarily used as the α-methylstyrene-based resin, has been originally developed for a rubber composition for a summer tire which includes styrene butadiene rubber (SBR) and butadiene rubber (BR); however, in recent years, SA85 has also been blended into a rubber composition which includes a great amount of isoprene-based rubber (NR).

However, when SA85 or a coumarone-indene-based resin is blended into a rubber composition including a great amount of NR, the hardness (Hs) at a low temperature becomes high from the viewpoint of the distribution orientation of the resin in a polymer and thus there has been room for improvement in consideration of the incapability of improving wet grip performance on a small-micrometer road surface or the degradation of performance on snow and ice. Particularly, for a rubber composition for a studless tire or a rubber composition for a winter tire in which the amount of isoprene-based rubber in 100% by mass of a rubber component is 30% by mass or more, there has been no resin known to be capable of improving both wet grip performance and performance on snow and ice.

US 2011/0144236 A1 discloses a rubber composition for use in a tire tread comprising a specific kind of silica and an aromatic modified terpene resin.

US 2014/0107261 A1 describes a rubber composition including a mixture of solid resin and softener, wherein the solid resin may be a teperne resin and the softener may be an oil.

JP 2007-321,093 A discloses a rubber composition including natural rubber and butadiene rubber as well as terperne resin having a glass transition temperature of -10°C or less.

### [Related art document]

### [Patent Document]

[Patent Document 1] Japanese Unexamined Patent Publication No. 2013-1805

### [Disclosure of the Invention]

### [Problem that the Invention is to Solve]

An object of the prevent invention is to solve the above-described problems and to provide a rubber composition for a tire which improves both wet grip performance and performance on snow and ice and, furthermore, is also capable of providing favorable wear resistance and elongation at break, and a pneumatic tire using the same.

### [Means for solving the problem]

The present invention relates to a rubber composition for a tire in which, in 100% by mass of a rubber component, the content of isoprene-based rubber is in a range of 25% by mass to 65% by mass and the content of the butadiene rubber is in a range of 35% by mass to 75% by mass and in relation to 100 parts by mass of the rubber component, the content of an oil-extended terpene-based resin having a softening point measured in accordance with JIS K 6220-1:2001 in a range of 10°C to 50°C, wherein the hydroxyl value measured in accordance with JIS K0070:1992 of the non-oil-extended resin component in the oil-extended terpene-based resin is 20 or less, is in a range of 1 part by mass to 30 parts by mass.

The total content of silica and carbon in relation to 100 parts by mass of the rubber component is preferably in a range of 60 parts by mass to 140 parts by mass.

The SP value measured in accordance with the Hoy method of the non-oil-extended resin component in the oil-extended terpene-based resin is preferably 8.6 or less.

The hydroxyl value value measured in accordance with JIS K0070:1992of the non-oil-extended resin component in the oil-extended terpene-based resin is preferably 15 or less.

The amount of a pure sulfur component, which is derived from a crosslinking agent, blended into 100 parts by mass of the rubber component is preferably 1.30 parts by mass or less.

Moreover, the present invention relates to a tire tread formed from the aforementioned rubber composition.

The present invention also relates to a pneumatic tire formed from the rubber composition.

### [Advantage of the Invention]

According to the present invention, since the rubber composition for a tire is obtained by blending a composition for a tire is obtained by blending a predetermined amount of the oil-extended terpene-based resin having a specific hydroxyl value and a specific softening point into the rubber component including the isoprene-based rubber, BR, and SBR within the certain ranges respectively, it is possible to provide a pneumatic tire in which wet grip performance, performance on snow and ice, wear resistance, and elongation at break are improved in a well-balanced manner.

### [Best Mode for Carrying Out the Invention]

A rubber composition of the present invention includes at least isoprene-based rubber and an oil-extended terpene-based resin having a specific hydroxyl value and a specific softening point and, furthermore, includes BR and/or SBR as necessary. When the specific oil-extended terpene-based resin is blended into a rubber composition including isoprene-based rubber, it is possible to improve wet grip performance, performance on snow and ice, wear resistance, and elongation at break in a well-balanced manner.

In the present invention, the oil-extended terpene-based resin refers to a molten mixture obtained by blending a terpene-based resin and oil at a temperature equal to or higher than the melting temperatures thereof.

Since the terpene-based resin includes constituent monomers the majority of which are identical to those of the isoprene-based rubber and has an SP value which is close to that of the isoprene-based rubber, the terpene-based resin has high compatibility with the isoprene-based rubber and is well mixed with and dispersed in the isoprene-based rubber during kneading (the terpene-based resin is preferentially distributed in the isoprene-based rubber). When the oil-extended terpene-based resin and the rubber component including the isoprene-based rubber are mixed together, it is considered that the terpene-based resin in the oil-extended terpene-based resin is more preferentially distributed in and mixed with the isoprene-based rubber, a fine sea-island structure is formed in the isoprene-based rubber, and it is possible to equally distribute a filler such as silica in individual phases. It is assumed that, due to the above-described action, an effect that improves wet grip performance, performance on snow and ice, wear resistance, and elongation at break can be obtained. That is, the mechanism of the improvement of the above-described performance by the present invention is considered to be attributed to the following three points: (1) the morphology of the rubber is miniaturized, (2) the dispersibility of silica in the isoprene-based rubber phase improves, and (3) the terpene-based resin is preferentially distributed in the isoprene-based rubber rather than in BR or SBR and thus Tg of a BR phase having a low low-temperature hardness is not easily increased.

The softening point of the oil-extended terpene-based resin is in a range of 10°C to 50°C and preferably in a range of 20°C to 40°C. In this range, the effect that improves wet grip performance, performance on snow and ice, wear resistance, and elongation at break is significant. In a case in which the softening point is lower than 10°C or higher than 50°C, a sufficient effect cannot be obtained. This is considered to be because the terpene-based resin is not appropriately distributed in the isoprene-based rubber or the amount of the terpene-based resin bled onto the surface of a tread is not sufficient.

The hydroxyl value (mgKOH/g-gel) of the non-oil-extended resin component in the oil-extended terpene-based resin is 20 or less, preferably 15 or less, more preferably 5 or less, still more preferably 1 or less, and particularly preferably 0. When the hydroxyl value thereof exceeds 20, there is a tendency that the effect that improves wet grip performance, performance on snow and ice, wear resistance, and elongation at break cannot be sufficiently obtained.

Meanwhile, the hydroxyl value of the non-oil-extended resin component in the oil-extended terpene-based resin refers to the amount of potassium hydroxide required to neutralize acetic acid bonded to a hydroxyl group when 1 g of the terpene-based resin included is acetylated, which is expressed in milligram, and the hydroxyl value thereof is measured through potentiometric titration (JIS K0070:1992). Therefore, in the case of the terpene-based resin not including any phenolic compound, generally, the hydroxyl value reaches zero.

The SP value of the non-oil-extended resin component in the oil-extended terpene-based resin is preferably 8.6 or less, more preferably 8.4 or less and is preferably 8.1 or more in terms of the strong effect that improves the respective performances.

Meanwhile, the SP value refers to the solubility parameter computed on the basis of the structure of a compound using the Hoy method. The Hoy method is, for example, a calculation method described in K. L. Hoy "Table of Solubility Parameters", Solvent and Coatings materials Research and Development Department, Union Carbites Corp. (1985).

The content of the oil-extended terpene-based resin is in a range of 1 part by mass to 50 parts by mass in relation to 100 parts by mass of the rubber component. When the content thereof is out of the above-described range, the effect that improves the performances cannot be obtained and, conversely, there is a tendency that the performances deteriorate. When the content of the oil-extended terpene-based resin exceeds 50 parts by mass, the content of an oil component in the composition increases and the wear resistance is likely to deteriorate. The content of the oil-extended terpene-based resin is preferably 2 parts by mass or more and more preferably 5 parts by mass or more, and preferably 40 parts by mass or less and more preferably 30 parts by mass or less.

As the terpene-based resin that serves as a raw material of the oil-extended terpene-based resin, a polyterpene resin obtained by polymerizing terpene compounds, an aromatic modified terpene resin obtained by polymerizing a terpene compound and an aromatic compound. In addition, it is also possible to use the above-described resins to which hydrogen is added.

The polyterpene resin refers to a resin obtained by polymerizing terpene compounds. The terpene compound refers to a compound which is a hydrocarbon expressed as a composition of (C₅H₈)ₙ or an oxygen-containing derivative thereof and includes a terpene classified into a monoterpene (C₁₀H₁₆), a sesquiterpene (C₁₅H₂₄), a diterpene (C₂₀H₃₂) as the basic skeleton and examples thereof include α-pinene, β-pinene, dipentene, limonene, myrcene, allo-ocimene, ocimene, α-phellandrene, α-terpinen, γ-terpinen, terpinolene, 1,8-cineole, 1,4-cineole, α-terpineol, β-terpineol, γ-terpineol.

Examples of the polyterpene resin include a pinene resin, a limonene resin, a dipentene resin, a pinene/limonene resin which include the afore-described terpene compound as a raw material. Among these, a pinene resin is preferred in terms of ease of occurrence of the polymerization reaction and the low price which is attributed to its presence as a constituent of a natural pine resin. The pinene resin generally includes both α-pinene and β-pinene as isomers and is classified depending on a contained component into a β-pinene resin mainly containing β-pinene and α-pinene resin mainly containing α-pinene. In the present invention, the β-pinene resin can be preferably used.

Examples of the aromatic (modified) terpene resin include a terpene phenolic resin for which the above-described terpene compound and a phenolic compound are used as raw materials, a terpene styrene resin for which the above-described terpene compound and a styrene-based compound are used as raw materials. In addition, it is also possible to use a terpene phenol styrene resin for which the above-described terpene compound, a phenolic compound, and a styrene-based compound are used as raw materials. Meanwhile, examples of the phenolic compound include phenol, bisphenol A, cresol, xylenol. In addition, examples of the styrene-based compound include styrene, α-methylstyrene.

To favorably obtain the effects of the present invention, the terpene-based resin is preferably a polyterpene resin and more preferably a β-pinene resin.

The softening point of the terpene-based resin that serves as a raw material of the oil-extended terpene-based resin is preferably in a range of 110°C to 140°C. When the softening point thereof is within the above-described range, it is possible to easily adjust the softening point of the oil-extended terpene-based resin to a range of 10°C to 50°C.

Meanwhile, the softening point of the terpene-based resin refers to a temperature at which the ball drops when the softening point regulated by JIS K 6220-1:2001 is measured using a ring and ball softening point measurement instrument.

The hydroxyl value (mgKOH/g-gel) of the terpene-based resin that serves as a raw material of the oil-extended terpene-based resin is 20 or less, preferably 15 or less, more preferably 5 or less, still more preferably 1 or less, and particularly preferably 0. When the hydroxyl value thereof exceeds 20, there is a tendency that the effect that improves wet grip performance, performance on snow and ice, wear resistance, and elongation at break cannot be sufficiently obtained.

The SP value of the non-oil-extended resin component in the terpene-based resin that serves as a raw material of the oil-extended terpene-based resin is preferably 8.6 or less, more preferably 8.4 or less and is preferably 8.1 or more in terms of the strong effect that improves the respective performances.

As the oil that serves as a raw material of the oil-extended terpene-based resin, it is possible to use, for example, a petroleum-based process oil such as a paraffin-based process oil, an aroma-based process oil, or a naphthene-based process oil. The paraffin-based process oil, the aroma-based process oil, and the naphthene-based process oil are preferred since the manufacturing of the oil-extended terpene-based resin is easy and it is possible to easily adjust the softening point of the obtained oil-extended terpene-based resin to a range of 10°C to 50°C.

The mass ratio (terpene-based resin/oil) of the terpene-based resin to the oil in the oil-extended terpene-based resin is preferably in a range of 70/30 to 30/70 since it is possible to easily adjust the softening point of the obtained oil-extended terpene-based resin to a range of 10°C to 50°C.

The oil-extended terpene-based resin can be prepared by heating the terpene-based resin and the oil to temperatures of approximately the respective resin melting points + 50°C and mixing the terpene-based resin and the oil for approximately 10 minutes to 30 minutes. The oil-extended terpene-based resin can be manufactured using a well-known heating apparatus and a well-known mixing apparatus and, for example, the oil-extended terpene-based resin can be prepared by stirring under heating and thus melting the terpene-based resin and the oil using an oil bath. After that, the oil-extended terpene-based resin is cooled to room temperature, is crushed into a powder form using a mortar, and is used.

The rubber composition of the present invention includes isoprene-based rubber as a rubber component and BR and/or SBR as necessary. As the rubber component, it is preferable to jointly use isoprene-based rubber and BR to favorably obtain the effects of the present invention.

Examples of the isoprene-based rubber include synthetic isoprene rubber (IR), natural rubber (NR), reformed natural rubber, and the like. Examples of the NR also include deproteinised natural rubber (DPNR) and high purity natural rubber (HPNR), and examples of the reformed natural rubber include epoxidized natural rubber (ENR), hydrogenated natural rubber (HNR), grafted natural rubber. Specifically, as NR, natural rubber ordinarily used in the tire industry such as SIR20, RSS#3, and TSR20 can be used. Among these, NR and synthetic isoprene rubber are preferred since the SP value is close to that of the terpene-based resin and the compatibility with the terpene-based resin is excellent.

The content of the isoprene-based rubber in 100% by mass of the rubber component is 25% by mass or more, and preferably 30% by mass or more. When the content thereof is less than 10% by mass, there is a concern that sufficient elongation at break and wear resistance cannot be ensured. The content of the isoprene-based rubber in 100% by mass of the rubber component is 65% by mass or less, and preferably 50% by mass or less in view of the favorable balance among wet grip performance, performance on snow and ice, wear resistance, and elongation at break.

As BR, it is possible to use butadiene rubber ordinarily used in the tire industry such as high cis BR such as BR150B manufactured by Ube Industries, Ltd., BR including syndiotactic 1,2-polybutadiene crystal (SPB) such as VCR412 manufactured by Ube Industries, Ltd., high vinyl BR such as Europrene BR HV80 manufactured by Polimeri Europa, and high cis BR synthesized using a rare earth element-based catalyst (rare earth-based BR). Among these, the rare earth-based BR is preferred since favorable wear resistance and a low gas mileage can be obtained.

As the rare earth-based BR, a well-known rare earth-based BR in the related art can be used and examples thereof include butadiene rubber synthesized using a rare earth element-based catalyst (a catalyst including a lanthanum-series rare earth element compound, an organic aluminum compound, aluminoxane, a halogen-containing compound, and, as necessary, a Lewis base). Among these, Nd-based BR synthesized using a neodymium-based catalyst is preferred since favorable wear resistance can be obtained.

The content of BR in 100% by mass of the rubber component is 75% by mass or less, and preferably 70% by mass or less. When the content thereof is greater than 80% by mass, the content of the isoprene-based rubber decreases and there is a concern that sufficient elongation at break and wear resistance cannot be ensured. The content of BR in 100% by mass of the rubber component is 35% by mass or more, and preferably 50% by mass or more since favorable wear resistance and performance on snow and ice can be obtained.

SBR is not particularly limited, well-known SBR in the related art such as solution SBR or emulsion SBR can be used, and particularly, various types of modified SBR for silica is preferred. As the modified SBR for silica, SBR in which the terminal or main chain of a polymer is modified using a variety of modifying agents can be used and specific examples thereof include the modified SBRs described in Japanese Unexamined Patent Publication No. 2010-077412, Japanese Unexamined Patent Publication No. 2006-274010, Japanese Unexamined Patent Publication No. 2009-227858, Japanese Unexamined Patent Publication No. 2006-306962, Japanese Unexamined Patent Publication No. 2009-275178. Among these, modified SBR obtained by reacting a modifying agent represented by General Formula (I) described below can be preferably used.

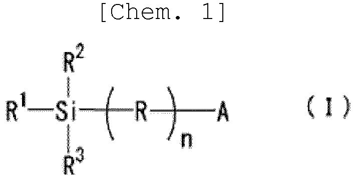

(In the formula, n represents an integer from 1 to 10, R represents a divalent hydrocarbon group, for example, -CH₂-, each of R¹, R², and R³ independently represents a hydrocarbyl group having 1 to 4 carbon atoms or a hydrocarbyloxy group having 1 to 4 carbon atoms, at least one of R¹, R², and R³ is a hydrocarbyloxy group, and A represents a functional group having a nitrogen atom.)

The content of SBR in 100% by mass of the rubber component is 70% by mass or less and preferably 65% by mass or less. When the content thereof is greater than 70% by mass, the content of the isoprene-based rubber or BR decreases and there is a concern that sufficient wear resistance cannot be ensured. The content of SBR in 100% by mass of the rubber component may be 0% by mass, but the content thereof is preferably 15% by mass or more and more preferably 25% by mass or more since favorable wet grip performance for passenger car tires can be obtained.

The rubber composition of the present invention preferably includes silica and/or carbon black and more preferably includes a blend of both silica and carbon black as a filler. The silica and the carbon black are not particularly limited and silica and carbon black ordinarily used in the tire industry can be used.

The nitrogen adsorption specific surface area (N₂SA) of the silica is preferably 80 m²/g or more and more preferably 110 m²/g or more, and is preferably 260 m²/g or less and more preferably 240 m²/g or less since the balance between a reinforcing effect and dispersibility is favorable.

For the same reason, the N₂SA of the carbon black is preferably 60 m²/g or more and more preferably 100 m²/g or more, and is preferably 200 m²/g or less and more preferably 180 m²/g or less.

Meanwhile, in the present specification, the N₂SA of the silica is a value measured using a BET method according to ASTM D3037-81 and the N₂SA of the carbon black is a value obtained according to JIS K 6217-2:2001.

The content of the silica is preferably 30 parts by mass or more and more preferably 55 parts by mass or more, and is preferably 135 parts by mass or less, more preferably 125 parts by mass or less, and still more preferably 115 parts by mass or less since wet grip performance and a low gas mileage can be obtained.

For the same reasons and the viewpoint of preventing the deterioration by ultraviolet rays, the content of the carbon black is preferably 3 parts by mass or more and more preferably 4 parts by mass or more, and is preferably 50 parts by mass or less, more preferably 30 parts by mass or less, and still more preferably 10 parts by mass or less.

For the same reasons, the total content of the silica and the carbon black is preferably 60 parts by mass or more and more preferably 65 parts by mass or more, and is preferably 140 parts by mass or less, more preferably 135 parts by mass or less, and still more preferably 130 parts by mass or less.

The rubber composition of the present invention preferably includes a silane coupling agent. As the silane coupling agent, a compound including sulfur (sulfide bond), which has been jointly used with silica in the related art of the rubber industry, can be used and examples thereof include a sulfide-based silane coupling agent, a mercapto-based silane coupling agent, a vinyl-based silane coupling agent, an amino-based silane coupling agent, a glycidoxy-based silane coupling agent, a nitro-based silane coupling agent, a chloro-based silane coupling agent. Specifically, Si69, Si75 manufactured by Evonik Industries are commercially available.

In addition, as the silane coupling agent, a compound represented by the following formula can also be preferably used. As the compound represented by the following formula, NXT manufactured by Momentive Performance Materials Inc. are commercially available.

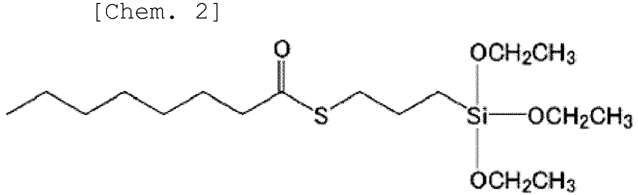

The content of the silane coupling agent is preferably 1 part by mass or more and more preferably 3 parts by mass or more in relation to 100 parts by mass of the silica. When the content thereof is less than 1 part by mass, there is a tendency that wear resistance and elongation at break deteriorate. The content of the silane coupling agent is preferably 15 parts by mass or less and more preferably 12 parts by mass or less. When the content thereof is greater than 15 parts by mass, there is a tendency that an effect corresponding to an increase in cost cannot be obtained and, additionally, there are cases in which the silane coupling agent remaining after kneading causes the porosity (sponge like porous) in an extrusion step.

The rubber composition of the present invention preferably includes a crosslinking agent. As the crosslinking agent, for example, a sulfur-containing compound having a crosslinking action such as a sulfur crosslinking agent or a sulfur-containing hybrid crosslinking agent can be used.

As the sulfur crosslinking agent, sulfur which is ordinarily used for vulcanization in the rubber field can be used and specific examples thereof include powder-form sulfur, precipitated sulfur, colloidal sulfur, insoluble sulfur, highly-dispersive sulfur.

Examples of the sulfur-containing hybrid crosslinking agent include an alkyl sulfide crosslinking agent such as an alkyl phenol sulfur chloride condensate, sodium 1,6-hexamethylenedithiosulfate dihydrate, or 1,6-bis(N,N'-dibenzylthiocarbamoyldithio)hexane, dithiophosphate. Specifically, TACKIROL V200 manufactured by Taoka Chemical Co., Ltd., DURALINK HTS manufactured by Flexis AG, Vulcuren VP KA9188 manufactured by Lanxess, Rhenogran SDT-50 (dithiophosphoryl polysulfide) manufactured by Rhein Chemie Additives are commercially available.

In the rubber composition of the present invention, the amount of a pure sulfur component, which is derived from the crosslinking agent, blended into 100 parts by mass of the rubber component is preferably 1.30 parts by mass or less and more preferably 1.20 parts by mass or less. When the amount thereof is greater than 1.30 parts by mass, there is a tendency that wear resistance deteriorates. The amount of the pure sulfur component, which is derived from the crosslinking agent, blended is preferably 0.30 parts by mass or more and more preferably 0.50 parts by mass or more. When the amount thereof is less than 0.30 parts by mass, a crosslinking reaction cannot sufficiently proceed between the polymers and thus there is a concern of low hardness. In addition, the co-crosslinking adhesive force with an adjacent member becomes weak.

Meanwhile, in the present specification, the amount of the pure sulfur component, which is derived from the crosslinking agent, blended refers to the total amount of all sulfur components included in the entire crosslinking agent which is injected during final kneading (finishing kneading).

The rubber composition of the present invention preferably includes aluminum hydroxide in order to accelerate the blooming of the resin included during travelling and improve wet performance. The aluminum hydroxide is not particularly limited and ordinary aluminum hydroxide in the tire industry can be used.

The average particle diameter of the aluminum hydroxide is preferably 0.69 µm or less, more preferably 0.65 µm or less, and still more preferably 0.62 µm or less and is preferably 0.20 µm or more and more preferably 0.25 µm or more since favorable wear resistance and wet grip performance can be obtained.

Meanwhile, the average particle diameter of the aluminum hydroxide refers to the number average particle diameter and a value measured using a transmission electron microscope.

The nitrogen adsorption specific surface area (N₂SA) of the aluminum hydroxide is preferably 10 m²/g or more, more preferably 12 m²/g or more, and still more preferably 14 m²/g or more, and is preferably 110 m²/g or less, more preferably 100 m²/g or less, still more preferably 90 m²/g or less, and particularly preferably 80 m²/g or less since favorable wear resistance and wet grip performance can be obtained.

Meanwhile, the N₂SA of the aluminum hydroxide is a value measured using a BET method according to ASTM D3037-81.

The content of the aluminum hydroxide is preferably 1 part by mass or more, more preferably 2 parts by mass or more, and still more preferably 3 parts by mass or more in relation to 100 parts by mass of the rubber component. When the content thereof is less than 1 part by mass, there is a tendency that the improvement effect of the aluminum hydroxide cannot be sufficiently obtained. The content of the aluminum hydroxide is preferably 30 parts by mass or less, more preferably 25 parts by mass or less, and still more preferably 20 parts by mass or less. When the content thereof is greater than 30 parts by mass, there is a concern that sufficient wear resistance cannot be ensured.

In addition to the above-described components, compounding agents that are ordinarily used in the manufacturing of the rubber composition, for example, zinc oxide, stearic acid, a processing aid, an anti-aging agent, wax, oil, an adhesive resin, a vulcanization accelerator can be appropriately blended into the rubber composition of the present invention.

The rubber composition of the present invention can be manufactured using an ordinary method. That is, the rubber composition can be manufactured using a method in which the respective components are kneaded using a Banbury mixer, a kneader, an open roll and then are vulcanized. The rubber composition can be preferably used for tires and treads.

A pneumatic tire of the present invention is manufactured with an ordinary method using the above-described rubber composition.

That is, the rubber composition into which the above-described components are blended is extruded into suitable shapes of individual tire members such as a tread before being vulcanized and is shaped together with other tire members in a tire-shaping machine using an ordinary method, thereby shaping a non-vulcanized tire. This non-vulcanized tire is heated and pressurized in a vulcanizing machine, thereby obtaining a tire.

The pneumatic tire of the present invention is preferable for passenger vehicle tires, large passenger vehicle tires, large SUV tires, heavy load tires for trucks, buses, light truck tires, and the pneumatic tire can be used as the winter tire and studless tire thereof.

### [Examples]

The present invention will be specifically described on the basis of examples, but the present invention is not limited thereto.

### <Production of terminal-modifying agent>

3-(N,N-dimethylamino)propyltrimethoxysilane (23.6 g, manufactured by AZmax. co) was put into a 100 ml volumetric flask in a nitrogen atmosphere and, furthermore, anhydrous hexane (manufactured by Kanto Chemical Co., Inc.) was added, thereby producing a total amount of 100 ml of a terminal-modifying agent.

### <Copolymer Manufacturing Example 1>

n-Hexane (18 L), styrene (740 g, manufactured by Kanto Chemical Co., Inc.), butadiene (1260 g), and tetramethylethylenediamine (10 mmol) were added to a 30 L pressure tight case which was sufficiently substituted with nitrogen and were heated to 40°C. Next, butyllithium (10 mL) was added, then, the components were heated to 50°C, and were stirred for three hours. Next, the terminal-modifying agent (11 mL) was added and the components were stirred for 30 minutes. After methanol (15 mL) and 2,6-tert-butyl-p-cresol (0.1 g) were added to the reaction solution, the reaction solution was put into a stainless steel container including methanol (18 L) and an agglomerate was collected. The obtained agglomerate was depressurized and dried for 24 hours, thereby obtaining modified SBR.

### <Preparation of oil-extended terpene-based resin (1) >

After YS resin PX1250N manufactured by Yasuhara Chemical Co., Ltd. (600 g, softening point: 125°C, Tg: 69°C, hydroxyl value: 0, SP value: 8.26, β-pinene resin) was heated to 200°C in an oil bath, a paraffin-based process oil manufactured by Japan Energy Corporation (400 g, PROCESS P-200) was added, the resin and the process oil were fully melted, then, were stirred and mixed for five minutes, and then were cooled with water, thereby obtaining an oil-extended terpene-based resin (1). The softening point of the obtained oil-extended terpene-based resin (1) was 45°c.

### <Preparation of oil-extended terpene-based resin (2) >

After YS resin PX1250N manufactured by Yasuhara Chemical Co., Ltd. (400 g, softening point: 125°C, Tg: 69°C, hydroxyl value: 0, SP value: 8.26, β-pinene resin) was heated to 200°C in an oil bath, a paraffin-based process oil manufactured by Japan Energy Corporation (600 g, PROCESS P-200) was added, the resin and the process oil were fully melted, then, were stirred and mixed for five minutes, and then were cooled with water, thereby obtaining an oil-extended terpene-based resin (2). The softening point of the obtained oil-extended terpene-based resin (2) was 15°c.

### <Preparation of oil-extended terpene-based resin (3) >

After YS resin PX1250N manufactured by Yasuhara Chemical Co., Ltd. (500 g, softening point: 125°C, Tg: 69°C, hydroxyl value: 0, SP value: 8.26, β-pinene resin) was heated to 200°C in an oil bath, an aroma-based process oil manufactured by H&R (500 g, TDAE oil, Vivatec 500) was added, the resin and the process oil were fully melted, then, were stirred and mixed for five minutes, and then were cooled with water, thereby obtaining an oil-extended terpene-based resin (3). The softening point of the obtained oil-extended terpene-based resin (3) was 35°c.

### <Preparation of oil-extended terpene-based resin (4)>

After YS resin PX1150N manufactured by Yasuhara Chemical Co., Ltd. (500 g, softening point: 121°C, Tg: 68°C, hydroxyl value: 0, SP value: 8.26, β-pinene resin) was heated to 200°C in an oil bath, a paraffin-based process oil manufactured by Japan Energy Corporation (500 g, PROCESS P-200) was added, the resin and the process oil were fully melted, then, were stirred and mixed for five minutes, and then were cooled with water, thereby obtaining an oil-extended terpene-based resin (4). The softening point of the obtained oil-extended terpene-based resin (4) was 30°c.

### <Preparation of oil-extended terpene-based resin (5) >

After YS resin PX800 manufactured by Yasuhara Chemical Co., Ltd. (500 g, softening point: 80°C, Tg: 32°C, hydroxyl value: 0, SP value: 8.26, β-pinene resin) was heated to 200°C in an oil bath, a paraffin-based process oil manufactured by Japan Energy Corporation (500 g, PROCESS P-200) was added, the resin and the process oil were fully melted, then, were stirred and mixed for five minutes, and then were cooled with water, thereby obtaining an oil-extended terpene-based resin (5). The softening point of the obtained oil-extended terpene-based resin (5) was 8°c.

### <Preparation of oil-extended terpene-based resin (6)>

After YS resin PX1250N manufactured by Yasuhara Chemical Co., Ltd. (700 g, softening point: 125°C, Tg: 69°C, hydroxyl value: 0, SP value: 8.26, β-pinene resin) was heated to 200°C in an oil bath, a paraffin-based process oil manufactured by Japan Energy Corporation (300 g, PROCESS P-200) was added, the resin and the process oil were fully melted, then, were stirred and mixed for five minutes, and then were cooled with water, thereby obtaining an oil-extended terpene-based resin (6). The softening point of the obtained oil-extended terpene-based resin (6) was 60°c.

### <Preparation of oil-extended terpene-based resin (7) >

After Sylvatraxx 6720 manufactured by Arizona Chemical Company, LLC. (600 g, softening point: 117°C, hydroxyl value: 11, SP value: 8.5) was heated to 200°C in an oil bath, a paraffin-based process oil manufactured by Japan Energy Corporation (400 g, PROCESS P-200) was added, the resin and the process oil were fully melted, then, were stirred and mixed for five minutes, and then were cooled with water, thereby obtaining an oil-extended terpene-based resin (7). The softening point of the obtained oil-extended terpene-based resin (7) was 38°c.

### <Preparation of oil-extended terpene-based resin (8)>

After Sylvatraxx 4202 manufactured by Arizona Chemical Company, LLC. (600 g, softening point: 115°C, hydroxyl value: 50, SP value: 8.75) was heated to 200°C in an oil bath, a paraffin-based process oil manufactured by Japan Energy Corporation (400 g, PROCESS P-200) was added, the resin and the process oil were fully melted, then, were stirred and mixed for five minutes, and then were cooled with water, thereby obtaining an oil-extended terpene-based resin (8). The softening point of the obtained oil-extended terpene-based resin (8) was 37°c.

The oil-extended terpene-based resins (1) to (8) are summarized in Table 1.

**[Table 1]**

| | Resin | | Oil | | Softening point (°C) | Hydroxy 1 value |
|---|---|---|---|---|---|---|
| | Resin type | Amount blended (g) | Oil type | Amount blended (g) | | |
| Oil-extended terpene-based resin (1) | PX1250N | 600 | Paraffin | 400 | 45 | 0 |
| Oil-extended terpene-based resin (2) | PX1250N | 400 | Paraffin | 600 | 15 | 0 |
| Oil-extended terpene-based resin (3) | PX1250N | 500 | TDAE | 500 | 35 | 0 |
| Oil-extended terpene-based resin (4) | PX11150N | 500 | Paraffin | 500 | 30 | 0 |
| Oil-extended terpene-based resin (5) | PX800 | 500 | Paraffin | 500 | 8 | 0 |
| Oil-extended terpene-based resin (6) | PX1250N | 700 | Paraffin | 300 | 60 | 0 |
| Oil-extended terpene-based resin (7) | 6720 | 600 | Paraffin | 400 | 38 | 11 |
| Oil-extended terpene-based resin (8) | 4202 | 600 | Paraffin | 400 | 37 | 50 |

Hereinafter, a variety of chemicals used in examples and comparative examples will be summarized.
NR: TSR20
BR: CB25 manufactured by Lanxess (high cis BR synthesized using an Nd-based catalyst, Tg: -110°C)
Carbon black: SHOWBLACK N220 manufactured by Cabot Japan K.K. (N₂SA: 114 m²/g)
Silica: ULTRASIL VN3 manufactured by Evonik Industries (N₂SA: 175 m²/g)
Aluminum hydroxide (1): ATH#B manufactured by Sumitomo Chemical Co., Ltd. (average particle diameter: 0.60 µm, N₂SA: 15 m²/g)
Aluminum hydroxide (2): A product obtained by crushing ATH#B manufactured by Sumitomo Chemical Co., Ltd. using a dry ball mill (average particle diameter: 0.35 µm, N₂SA: 95 m²/g)
Styrene-based resin SA85: Sylvatraxx 4401 manufactured by Arizona Chemical Company, LLC. (hydroxyl value: 0, SP value: 9.1, softening point: 85°C)
Paraffin oil: PROCESS P-200 manufactured by Japan Energy Corporation
TDAE oil: Vivatec 500 manufactured by H&R
Wax: Ozoace0355 manufactured by Nippon Seiro Co., Ltd.
Anti-aging agent 6PPD: ANTIGEN 6C manufactured by Sumitomo Chemical Co., Ltd. (N-(1,3-dimethylbutyl)-N'-phenyl-p-phenylenediamine)
Anti-aging agent TMQ: NOCRAC 224 manufactured by Ouchi Shinko chemical Industrial Co., Ltd. (2,2,4-trimethyl-1,2-dihydroquinoline polymer)
Stearic acid: Stearic acid "TSUBAKI" manufactured by NOF Corporation
Zinc oxide: "GINREI R" manufactured by Toho Zinc Co., Ltd.
Silane coupling agent (1): NXT manufactured by Momentive Performance Materials Inc.
Silane coupling agent (2): Si75 manufactured by Evonik Industries
Sulfur-containing hybrid crosslinking agent: Vulcuren VP KA9188 manufactured by Lanxess (1,6-bis(N,N'-dibenzylthiocarbamoyldithio)hexane) (amount of sulfur blended: 20.6%)
Sulfur crosslinking agent: HK-200-5 manufactured by Hosoi Chemical Industry Co., Ltd. (5% oil-containing powder-form sulfur)
Vulcanization accelerator TBBS: NOCCELER NS-G manufactured by Ouchi Shinko chemical Industrial Co., Ltd. (N-tert-butyl-2-benzothiazolesulfeneamide)
Vulcanization accelerator DPG: NOCCELER D manufactured by Ouchi Shinko chemical Industrial Co., Ltd. (1,3-diphenylguanidine)

### <Examples and comparative examples>

According to the formulations described in Table 2, using a Banbury mixer, first, (X kneading: 1^{st} kneading) the full amount of a rubber component and carbon black and a half amount of each of silica and the silane coupling agent were kneaded for five minutes under a condition of 150°C, then, (Y kneading: 2^{nd} kneading) the rest of the materials other than the crosslinking agent and the vulcanization accelerator were added, and were kneaded for four minutes under a condition of 150°C, thereby obtaining a kneaded substance. Next, (F kneading: finishing kneading) the crosslinking agent and the vulcanization accelerator were added to the obtained kneaded substance and were kneaded in for four minutes under a condition of 105°C using an open roll, thereby obtaining a non-vulcanized rubber composition.

The obtained non-vulcanized rubber composition was press-vulcanized for 12 minutes under a condition of 170°C, thereby obtaining a vulcanized rubber composition.

In addition, the obtained non-vulcanized rubber composition was extruded into a tread shape, was attached to other tire members on a tire-shaping machine, and was vulcanized for 12 minutes under a condition of 170°C, thereby obtaining a tire for testing (tire size: 245/40R18, passenger vehicle studless tire).

The following evaluations were carried out using the obtained vulcanized rubber compositions and the obtained tires for testing. The evaluation results are described in Table 2.

### (Hardness)

According to "Rubber, vulcanized or thermoplastic - Determination of hardness" of JIS K6253, the hardness (shore A) of the vulcanized rubber composition at 23°C was measured using a type-A durometer. Meanwhile, in order to ensure stability (operation stability), in the examples and the comparative examples, the formulations were adjusted so that the hardness fell into a certain range. It does not become possible to appropriately compare elongations at break until the hardness falls in a certain range.

### (Tensile test)

Using a No. 3 dumbbell-type test specimen made of the vulcanized rubber composition, a tensile test was carried out at room temperature according to JIS K6251 of "Rubber, vulcanized or thermoplastic - Determination of tensile stress-strain properties" and the elongation at break EB (%) was measured. It appears that, as EB increases, the durability becomes more favorable.

### (Wet grip performance)

The tire for testing was mounted in a 2000 cc domestic FR vehicle and the vehicle was driven to travel around a test course on a wet asphalt road surface ten times. At this time, the test driver carried out sensory evaluations about the control stability of the driving and indexes were given on the basis of that of Comparative Example 3 as 100. It appears that, as the index increases, the wet grip performance becomes more favorable.

### (Wear resistance)

The tire for testing was mounted in a 2000 cc domestic FR vehicle and the vehicle was driven to travel around a test course on a dry asphalt road surface. The mounting positions of a control tire and the tire for testing in the vehicle were exchanged every 1000 km and vehicle travel factors causing wear were averaged. After the travelling of 30000 km, the tread depth of the tire tread rubber in the tire for testing was measured (8.0 mm in a new tire) and indexes were given on the basis of that of Comparative Example 3 as 100. It appears that, as the index increases, the amount of rubber worn is smaller and the wear resistance becomes more favorable.

### (On-ice braking performance)

The tire for testing was mounted in a 2000 cc domestic FR vehicle, the travel distance necessary to decrease the speed from 50 kph to 10 kph in an ABS braking mode was measured, and indexes were given on the basis of that of Comparative Example 3 as 100. It appears that, as the index increases, the on-ice braking performance becomes more favorable.

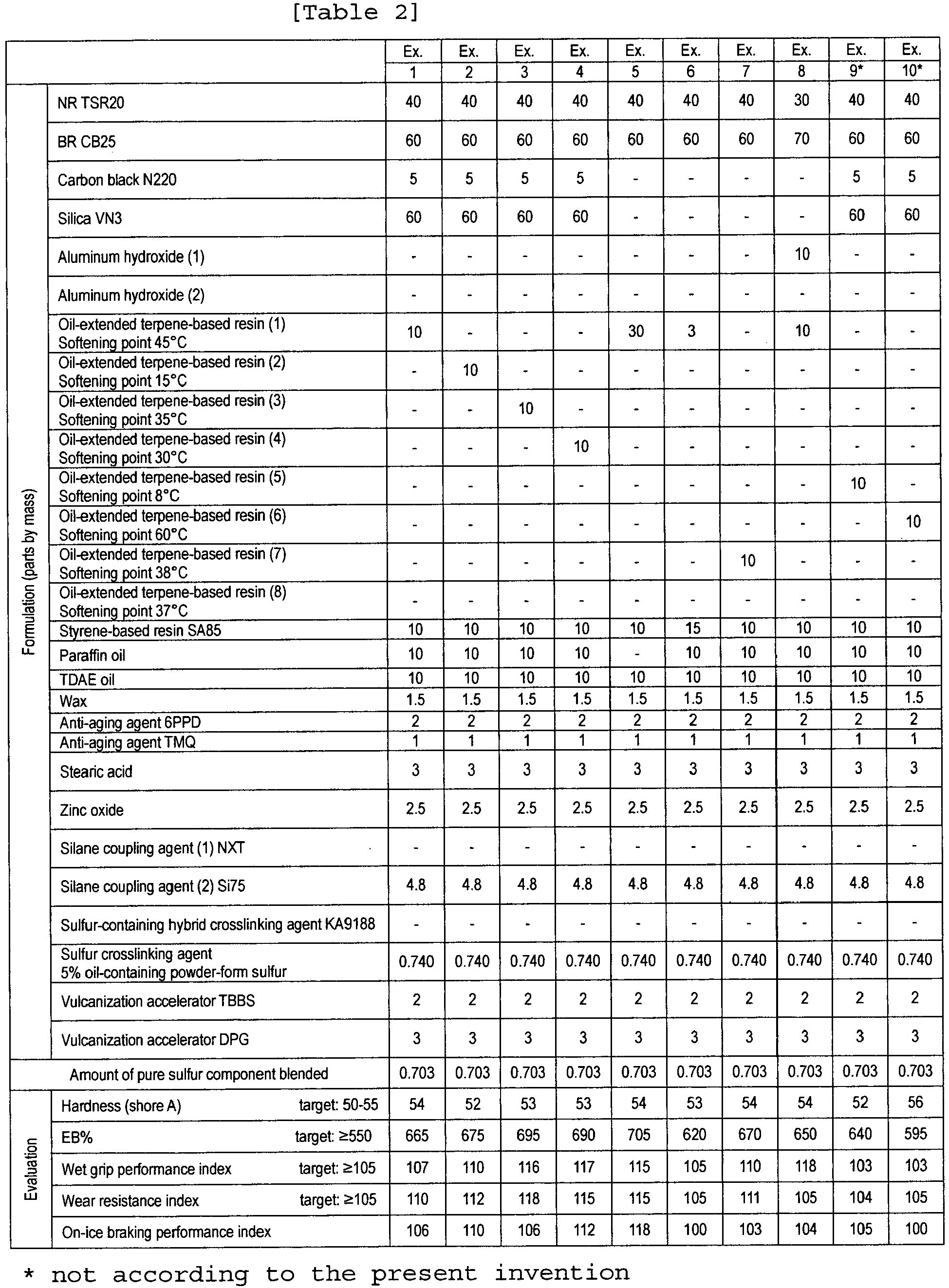

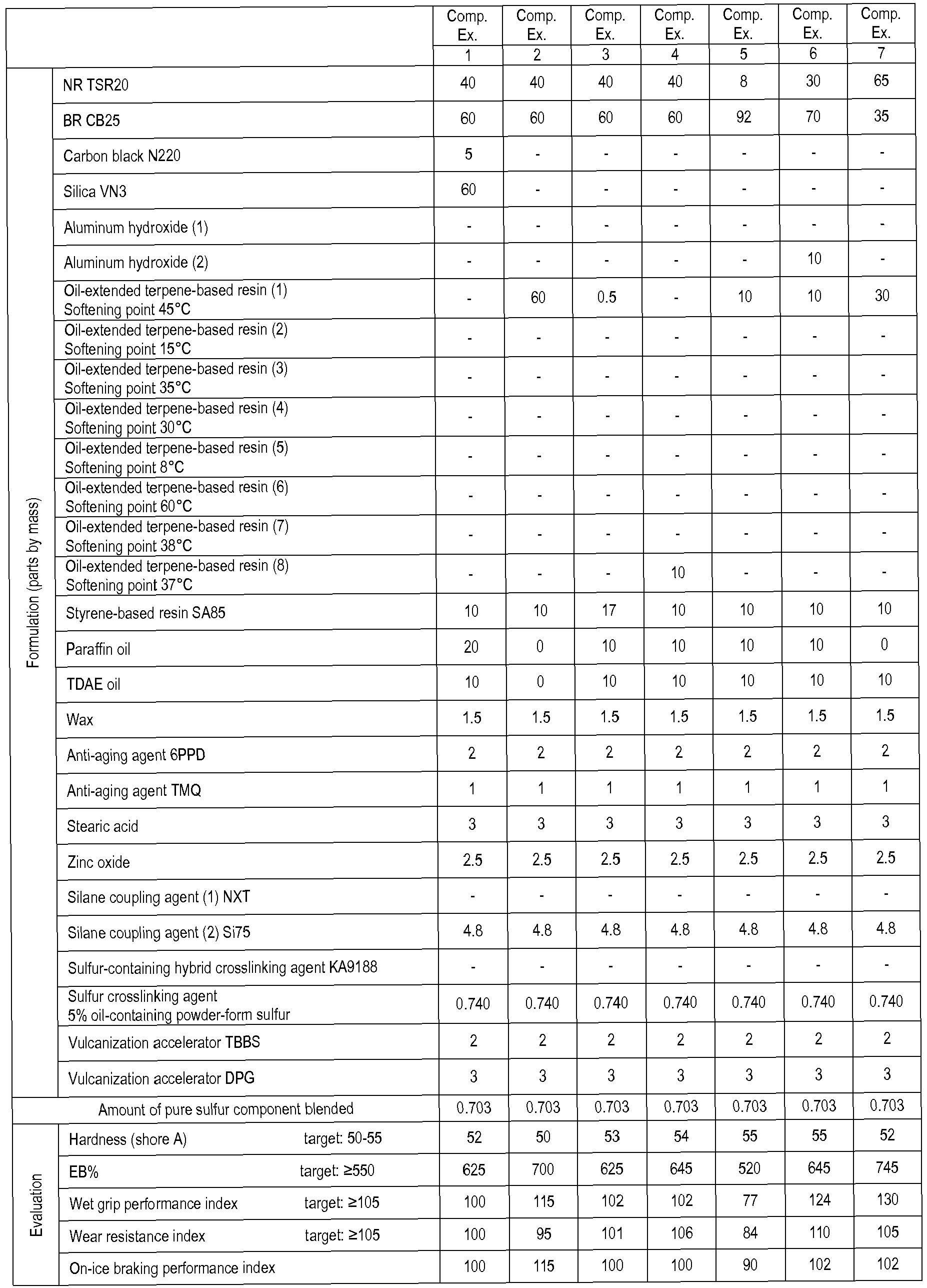

Table 2 shows that, in the examples in which the specific oil-extended terpene-based resin was blended into the rubber components in which the contents of isoprene-based rubber, BR and SBR were within certain ranges respectively, compared with Comparative Example 3 which serves as the standard, wet grip performance, performance on snow and ice, wear resistance, and elongation at break
were improved in a well-balanced manner.

## Claims

1. A rubber composition for a tire,
wherein, in 100% by mass of a rubber component, the content of isoprene-based rubber is in a range of 25% by mass to 65% by mass and the content of the butadiene rubber is in a range of 35% by mass to 75% by mass and
in relation to 100 parts by mass of the rubber component, the content of an oil-extended terpene-based resin having a softening point measured in accordance with JIS K 6220-1:2001 in a range of 10°C to 50°C, wherein the hydroxyl value measured in accordance with JIS K0070:1992 of the non-oil-extended resin component in the oil-extended terpene-based resin is 20 or less, is in a range of 1 part by mass to 30 parts by mass.

2. The rubber composition for a tire according to Claim 1,
wherein the total content of silica and carbon in relation to 100 parts by mass of the rubber component is in a range of 60 parts by mass to 140 parts by mass.

3. The rubber composition for a tire according to Claim 1 or 2,
wherein the SP value measured in accordance with the Hoy method of the non-oil-extended resin component in the oil-extended terpene-based resin is 8.6 or less.

4. The rubber composition for a tire according to any one of Claims 1 to 3,
wherein the hydroxyl value measured in accordance with JIS K0070:1992 of the non-oil-extended resin component in the oil-extended terpene-based resin is 15 or less.

5. The rubber composition for a tire according to any one of Claims 1 to 4,
wherein the amount of a pure sulfur component, which is derived from a crosslinking agent, blended into 100 parts by mass of the rubber component is 1.30 parts by mass or less.

6. A tire tread formed from a rubber composition for a tire according to any one of Claims 1 to 5.

7. A pneumatic tire formed from the rubber composition according to any one of Claims 1 to 5.

## Patentansprüche

1. Kautschukzusammensetzung für einen Reifen,
wobei in 100 Masse-% einer Kautschukkomponente der Gehalt an isoprenbasiertem Kautschuk in einem Bereich von 25 Masse-% bis 65 Masse-% liegt und der Gehalt des Butadienkautschuks in einem Bereich von 35 Masse-% bis 75 Masse-% liegt, und
in Relation zu 100 Masseteilen der Kautschukkomponente der Gehalt an ölgestrecktem, terpenbasiertem Harz, der einen Erweichungspunkt, gemäß JIS K 6220-1:2001 gemessen, in einem Bereich von 10°C bis 50°C aufweist, wobei der Hydroxylwert, gemäß JIS K0070:1992 gemessen, der nicht ölgestreckten Harzkomponente in dem ölgestreckten, terpenbasierten Harz 20 oder weniger ist, in einem Bereich von 1 Masseteil bis 30 Masseteilen liegt.

2. Kautschukzusammensetzung für einen Reifen nach Anspruch 1, wobei der Gesamtgehalt an Silica und Kohlenstoff in Relation zu 100 Masseteilen der Kautschukkomponente in einem Bereich von 60 Masseteilen bis 140 Masseteilen liegt.

3. Kautschukzusammensetzung für einen Reifen nach Anspruch 1 oder 2, wobei der SP-Wert, gemäß dem Hoy-Verfahren gemessen, der nicht ölgestreckten Harzkomponente in dem ölgestreckten, terpenbasierten Harz 8,6 oder weniger beträgt.

4. Kautschukzusammensetzung für einen Reifen nach einem der Ansprüche 1 bis 3, wobei der Hydroxylwert, gemäß JIS K0070:1992 gemessen, der nicht ölgestreckten Harzkomponente in dem ölgestreckten, terpenbasierten Harz 15 oder weniger beträgt.

5. Kautschukzusammensetzung für einen Reifen nach einem der Ansprüche 1 bis 4, wobei die Menge einer reinen Schwefelkomponente, die von einem Vernetzungsmittel abstammt, in 100 Masseteile der Kautschukkomponente hineingemischt, 1,30 Masseteile oder weniger beträgt.

6. Reifenlauffläche, die aus einer Kautschukzusammensetzung für einen Reifen nach einem der Ansprüche 1 bis 5 gebildet ist.

7. Luftreifen, der aus der Kautschukzusammensetzung nach einem der Ansprüche 1 bis 5 gebildet ist.

## Revendications

1. Composition de caoutchouc pour un pneumatique,
dans laquelle, dans 100 % en masse d'un composant caoutchouc, la teneur de caoutchouc à base d'isoprène est dans une plage de 25 % en masse à 65 % en masse et la teneur de caoutchouc butadiène est dans une plage de 35 % en masse à 75 % en masse et
en relation à 100 parties en masse du composant caoutchouc, la teneur d'une résine à base de terpène étendu à l'huile ayant un point de ramollissement, mesuré en accord avec la norme JIS K-1:2001 dans une plage de 10° C à 50° C, dans laquelle la valeur hydroxyle mesurée en accord avec la norme JIS K 0070:1992 du composant de résine non étendue à l'huile dans la résine à base de terpène étendu à l'huile est de 20 ou moins, est dans une plage de 1 partie en masse à 30 parties en masse.

2. Composition de caoutchouc pour un pneumatique selon la revendication 1,
dans laquelle la teneur totale de silice et de carbone, en relation à 100 parties en masse du composant caoutchouc, est dans une plage de 60 parties en masse à 140 parties en masse.

3. Composition de caoutchouc pour un pneumatique selon la revendication 1 ou 2,
dans laquelle la valeur SP, mesurée en accord avec la méthode de Hoy, du composant de résine non étendue à l'huile dans la résine à base de terpène étendu à l'huile est de 8,6 ou moins.

4. Composition de caoutchouc pour un pneumatique selon l'une quelconque des revendications 1 à 3,
dans laquelle la valeur hydroxyle, mesurée en accord avec la norme JIS K 0070:1992, du composant de résine non étendue à l'huile dans la résine à base de terpène étendu à l'huile est de 15 ou moins.

5. Composition de caoutchouc pour un pneumatique selon l'une quelconque des revendications 1 à 4,
dans laquelle la quantité d'un composant en soufre pur, qui est dérivé d'un agent de réticulation, mélangée dans 100 parties en masse du composant caoutchouc est de 1,30 parties en masse ou moins.

6. Bande de roulement de pneumatique formée d'une composition de caoutchouc pour un pneumatique en accord avec l'une quelconque des revendications 1 à 5.

7. Bandage pneumatique formé de la composition de caoutchouc en accord avec l'une quelconque des revendications 1 à 5.
